# EUROPÄISCHE PATENTSCHRIFT

(11) **EP 1 725 594 B1**
(45) Veröffentlichungstag und Bekanntmachung des Hinweises auf die Patenterteilung: **22.07.2009**
(21) Anmeldenummer: 05716118.4
(22) Anmeldetag: 16.03.2005
(51) Int. Cl.: C08F 220/58, C08F 220/54, C08F 220/60, C08F 220/34

(54) **POLYMERE ZUSAMMENSETZUNG UND DEREN VERWENDUNG ALS ZUSATZMITTEL IN WÄSSRIGEN BAUSTOFFSYSTEMEN SOWIE IN WASSERBASIERENDEN ANSTRICH- UND BESCHICHTUNGSSYSTEMEN**
POLYMER COMPOSITION AND USE OF THE SAME AS AN ADDITIVE IN AQUEOUS CONSTRUCTION SYSTEMS AND WATER-BASED PAINT AND COATING SYSTEMS
COMPOSITION POLYMERE ET SON UTILISATION COMME ADDITIF DANS DES SYSTEMES DE CONSTRUCTION AQUEUX ET DANS DES SYSTEMES DE PEINTURE ET DE REVETEMENT A BASE AQUEUSE

(30) Priorität: 17.03.2004 DE 102004013158
(43) Veröffentlichungstag der Anmeldung: 29.11.2006
(73) Patentinhaber: Construction Research & Technology GmbH, 83308 Trostberg (DE)
(72) Erfinder: SCHINABECK, Michael, 84518 Garching (DE); FRIEDRICH, Stefan, 84518 Garching (DE); HOLLAND, Uwe, 86517 Wehringen (DE); GÄBERLEIN, Peter, 86159 Augsburg (DE); SCHUHBECK, Manfred, 83308 Trostberg (DE)
(74) Vertreter: Dey, Michael
(86) Internationale Anmeldenummer: PCT/EP2005/002799
(87) Internationale Veröffentlichungsnummer: WO 2005/090424

(56) Entgegenhaltungen:
- EP-A- 0 757 998
- EP-A- 0 936 228

## Beschreibung

Die vorliegende Erfindung betrifft eine polymere Zusammensetzung bestehend aus wasserlöslichen oder wasserquellbaren sulfogruppenhaltigen assoziativ verdickenden Copolymeren in Kombination mit nichtionischen Polysaccharid-Derivaten und deren Verwendung als Zusatzmittel in wässrigen Baustoffsystemen auf der Basis hydraulischer Bindemittel wie Zement, Kalk, Gips, Anhydrit usw. sowie in wasserbasierenden Anstrich- und Beschichtungssystemen.

Wasserlösliche nicht ionische Abkömmlinge von Polysacchariden, insbesondere Cellulose- und Stärkederivate, werden üblicherweise in wässrigen Baustoffrnischungen verwendet, um das unerwünschte Verdunsten des Wassers, das für die Hydratation und Verarbeitbarkeit erforderlich ist bzw. dessen Abfließen in den Untergrund zu verzögern bzw. zu verhindern.

Indem sie in Anstrichsystemen, Putzen, Klebemörteln, Spachtelmassen und Fugenfüllern, aber auch in Spritzbetonen für den Tunnelbau sowie in Unterwasserbetonen die zentrale Funktion der Wasserretention kontrollieren, haben derartige Zusätze entscheidenden Einfluss auf die Konsistenz (Plastizität), offene Zeit, Glättvermögen, Segregation, Klebrigkeit, Haftung (am Untergrund und am Werkzeug), Standfestigkeit und Abrutschwiderstand sowie Haftzug- und Druckfestigkeit bzw. Schwindung.

Gemäß Ullmann's Enzyklopädie der Technischen Chemie (4. Auflage, Band 9, Seiten 208 - 210, Verlag Chemie Weinheim) sind die gebräuchlichsten Wasserretentionsmittel synthetisch erzeugte nichtionische Cellulose- und Stärkederivate wie Methylcellulose (MC), Hydroxyethylcellulose (HEC), Methylhydroxyethylcellulose (MHEC), Methylhydroxypropylcellulose (MHPC). Aber auch mikrobiell erzeugte Polysaccharide wie Welan Gum, Diutan Gum und natürlich vorkommende extraktiv isolierte Polysaccharide (Hydrocolloide), wie Alginate, Xanthane, Carrageenane, Galactomannane usw., werden entsprechend dem Stand der Technik zur Regelung des Wasserhaushaltes und der Rheologie von wässrigen Baustoff- und Anstrichsystemen eingesetzt.

Gemäß dem US-Patent 5,863,975 und der DE 198 06 482 A1 werden synthetische Polymere beschrieben, die Wasserretentionseigenschaften besitzen und carboxylgruppenhaltige oder sulfogruppenhaltige Copolymere enthalten.

Im Vergleich zu carboxylgruppenhaltigen Produkten weisen sulfoalkylierte Cellulosederivate, die u. a. in der EP 554 749 A2 beschrieben werden, ebenso wie die sulfogruppenhaltigen Polyelektrolyte gemäß DE 198 06 482 A1 eine ausgezeichnete Verträglichkeit mit mehrwertigen Kationen wie z. B. Calcium, Magnesium oder Aluminium auf.

Gemäß der WO 02/10 229 A1 werden sehr hochmolekulare wasserlösliche oder wasserquellbare sulfogruppenhaltige assoziativverdickende Copolymere offenbart, die im Gegensatz zu obigen Polyelektrolyten auch in Gegenwart hoher Salzkonzentrationen keinen Viskositätsabfall zeigen.

Die wasserquellbaren sulfogruppenhaltigen Copolymere, die aus der DE 198 06 482 A1 oder der WO 02/10 229 A1 bekannt sind, zeigen den Nachteil, dass sie vor allem in Fliesenklebern, aber auch in Putzen nicht die geforderte Klebrigkeit aufweisen. So haftet der Fliesenkleber zu wenig an der Kelle und lässt sich zu schlecht mit der Zahntraufel wieder aufnehmen. In beiden Anwendungen vor allem aber in Putzanwendungen stellt die Stabilität der Luftporen vereinzelt ein Problem dar. Die oft mit Luftporenbildnem eingeführte Luft platzt nach ca. 10 bis 20 Minuten deutlich auf.

Celluloseether, die obigen Nachteil nicht aufweisen, zeigen dagegen in Putzanwendung oft zu hohe Klebrigkeiten, die nur durch Zusatz von Formulierungskomponenten abgemildert werden können. Außerdem begrenzt die zu hohe Klebrigkeit die Einsatzmenge der Celluloseether und damit auch die einstellbare Wasserrückhaltung, da bei zu hohen Dosierungen der Putz oder Fliesenkleber nicht mehr verarbeitbar ist.

In standfesten Fliesenkleber müssen Celluloseether mit Formulierungskomponenten wie Stärkeethern und Polyacrylamiden abgemischt werden (formulierte Celluloseether wie z. B. beschrieben in den Druckschriften DE 12 83 726 A1 und DE 39 13 518 A1), damit die geforderte Standfestigkeit erreicht wird.

Der vorliegenden Erfindung lag daher die Aufgabe zugrunde, die mangelnde Klebrigkeit der synthetischen Polymere und die schlechte Luftporenstabilität durch Formulierung zu verbessern und darüber hinaus den Baustoff- und Anstrichsystemen ausgezeichnete anwendungstechnische Eigenschaften bei der Verarbeitung und im erhärteten bzw. getrockneten Zustand zu verleihen. Ein wichtiges Ziel war ferner, eine Erhöhung der Wasserrückhalteeigenschaften ohne störende Klebrigkeit oder unangenehme Verdickung zu erreichen.

Diese Aufgabe wurde erfindungsgemäß durch die Kombination von sulfogruppenhaltigen Copolymeren mit nichtionischen Polysaccharid-Derivaten entsprechend Anspruch 1 gelöst.

Es hat sich nämlich überraschenderweise gezeigt, dass die erfindungsgemäße Kombination der sulfogruppenhaltigen Copolymere mit nichtionischen Polysaccharid-Derivaten wie Methylcellulose (MC), Hydroxyethylcellulose (HEC), Hydroxypropylcellulose (HPC), Methylhydroxyethylcellulose (MHEC), Methylhydroxypropylcellulose (MHPC) sowie Welan Gum oder Diutan Gum unerwartete synergistische Effekte zeigt. So wird durch die Zusammensetzung mit den Polysaccharid-Derivaten u. a. eine erhebliche Verbesserungen des Wasserretentionsvermögens, der Luftporenstabilität und der Klebrigkeit in wässrigen Baustoffsystemen auf der Basis hydraulischer Bindemittel wie Zement, Kalt, Gips, Anhydrit usw. sowie in wasserbasierenden Anstrich- und Beschichtungssystemen erzielt, was keinesfalls vorhersehbar war.

Die verwendeten sulfogruppenhaltigen Copolymere entsprechend der vorliegenden Erfindung bestehen aus mindestens vier Baugruppen a), b), c) und d). Die erste Baugruppe a) stellt ein sulfogruppenhaltiges substituiertes Acryl- oder Methacrylderivat der Formel (I) dar: 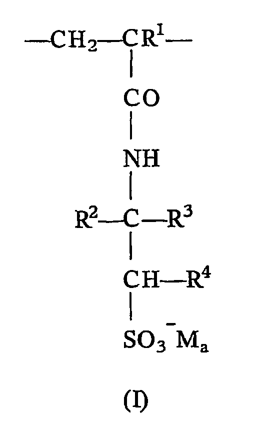 mit
- R¹ =: Wasserstoff oder Methyl,
- R², R³, R⁴ =: Wasserstoff, aliphatischer Kohlenwasserstoffrest mit 1 bis 6 C-Atomen, ggf. mit Methylgruppen substituierter Phenylrest und
- M =: Wasserstoff, ein- oder zweiwertiges Metallkation, Ammonium bzw. ein organischer Aminrest sowie
- a =: ½ oder 1.

Als ein- oder zweiwertiges Metallkation finden vorzugsweise Natrium-, Kalium-, Calcium- oder Magnesiumionen Verwendung. Als organische Aminreste werden vorzugsweise substituierte Ammoniumgruppen eingesetzt, die sich ableiten von primären, sekundären oder tertiären C₁- bis C₂₀-Alkylaminen, C₁- bis C₂₀-Alkanolaminen, C₅- bis C₈-Cycloalkylaminen und C₆- bis C₁₄-Arylaminen. Beispiele für entsprechende Amine sind Methylamin, Dimethylamin, Trimethylamin, Ethanolamin, Diethanolamin, Triethanolamin, Cyclohexylamin, Dicyclohexylamin, Phenylamin sowie Diphenylamin in der protonierten Ammoniumform.a ist 1 für Wasserstoff, einwertige Metallkationen, Ammonium und für organische Aminreste. Für zweiwertige Metallkationen ist a ½.

Die Baugruppe a) leitet sich vorzugsweise ab von Monomeren wie 2-Acrylamido-2-methylpropansulfonsäure, 2-Methacrylamido-2-methylpropansulfonsäure, 2-Acrylamidobutansulfonsäure, 3-Acrylamido-3-methylbutansulfonsäure, 2-Acrylamido-2,4,4-trimethylpentansulfonsäure. Besonders bevorzugt ist 2-Acrylamido-2-methylpropansulfonsäure.

Die zweite Baugruppe b) entspricht den Formeln (IIa) und/oder (IIb): 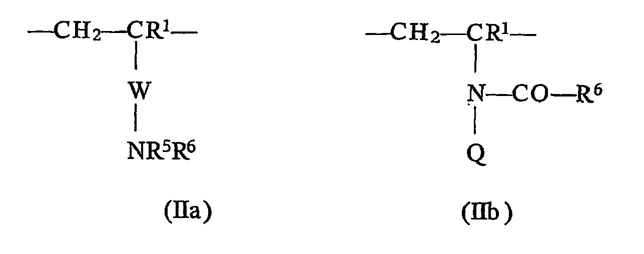 worin
- W =: -CO-, -CO-O- (CH₂)ₓ-, -CO-NR²- (CH₂)ₓ-,
- x =: 1 bis 6 darstellen und
- R¹ sowie R²: oben genannte Bedeutung besitzen.
- R⁵ und R⁶: stehen unabhängig voneinander für Wasserstoff, einen aliphatischen Kohlenwasserstoffrest mit 1 bis 20 C-Atomen, einen cycloaliphatischen Kohlenwasserstoffrest mit 5 bis 8 C-Atomen oder einen Arylrest mit 6 bis 14 C-Atomen. Diese Reste können ggf. mit Hydroxyl-, Carboxyl-oder Sulfonsäuregruppen substituiert sein.
- Q: bedeutet in Formel IIb) Wasserstoff oder -CHR⁵R⁷. Im Falle von Q # H können R⁵ und R⁶ außerdem in der Struktur (IIb) zusammen für eine -CH₂-(CH₂)y-Methylengruppe mit y =1 bis 4 stehen, die unter Einschluss des Restes der Formel (IIb) 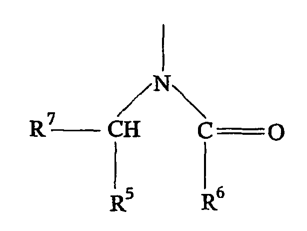 einen fünf bis achtgliedrigen heterozyklischen Ring bilden.
- R⁷: kann ein Wasserstoffatom, einen C₁- bis C₄-Alkylrest, eine Carboxylsäure- oder eine Carboxylatgruppe -COOMₐ darstellen, wobei
- M und a: die oben genannte Bedeutung besitzen.

Als Monomere, die die Struktur (IIa) bilden, kommen vorzugsweise folgende Verbindungen in Frage: Acrylamid, Methacrylamid, N-Methylacrylamid, N,N-Dimethylacrylamid, N-Ethylacrylamid, N-Cyclohexylacrylamid, N-Benzylacrylamid, N-Methylolacrylamid, N-tertiär Butylacrylamid usw. Beispiele für Monomere als Basis für die Struktur (IIb) sind N-Methyl-N-vinylformamid, N-Methyl-N-vinylacetamid, N-Vinylpyrrolidon, N-Vinylcaprolactam, N-Vinylpyrrolidon-5-carbonsäure u. a.

Die dritte Baugruppe c) entspricht den Formeln (IIIa) und/oder (IIIb) 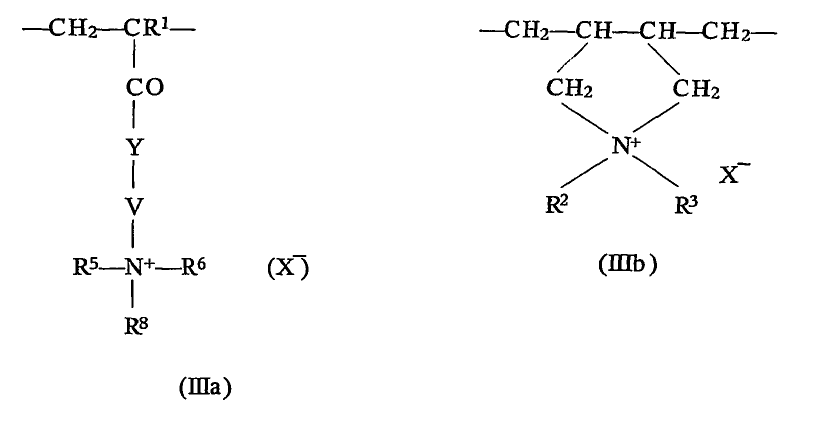 worin
- Y =: O, NH oder NR⁵,
- V =: -(CH₂)ₓ-, 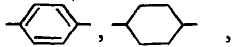
- R⁸ =: R⁵ bzw. R⁶, -(CH₂)ₓ-SO₃ ^{⊝}(M), 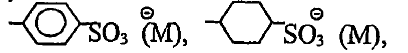
- X =: Halogen (vorzugsweise Cl, Br), C₁-bis C₄-Alkylsulfat (vorzugsweise Methylsulfat) oder C₁- bis C₄-Alkylsulfonat und
- R¹, R², R³, R⁵, R⁶ , M und x: oben genannte Bedeutung besitzen.

Als Monomere, welche die Struktur (IIIa) bilden, kommen vorzugsweise folgende Verbindungen in Frage: [2-(Acryloyloxy)-ethyl]-trimethyl-ammoniumchlorid, [2-(Acryloylamino)-ethyl]-trimethyl-ammoniumchlorid, [2-(Acryloyloxy)-ethyl]-trimethyl-ammoniummethosulfat, [2-(Methacryloyl-oxy)-ethyl]-trimethylammonium-chlorid bzw. -methosulfat, [3-(Methacryloylamino)-propyl]-trimethylammoniumchlorid, N-(3-Sulfopropyl)-N-methyacryloxyethyl-N'-N-dimethylammonium-betain, N-(3-Sulfopropyl)-N-methyacrylamidopropyl-N,N-dimethylammonium-betain und 1-(3-Sulfopropyl)-2-vinyl-pyridinium-betain.

Beispiele für Monomere als Basis für die Struktur (IIIb) sind N,N-Dimethyl-diallylammoniumchlorid und N,N-Diethyl-diallyl-ammoniumchlorid.

Die vierte Baugruppe d) entspricht der Formel (IV) 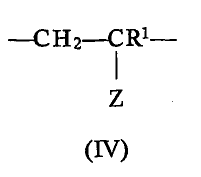 wobei
- Z =: -COO(CₘH₂ₘO)ₙ-R⁹,-(CH₂)ₚ-O(CₘH₂ₘO)ₙ-R⁹,
- R⁹ =: H, C₁-C₄-Alkyl, 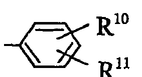 sowie ungesättiger oder gesättigter, linearerer oder verzweigter aliphatischer Alkylrest mit 20 bis 40 C-Atomen,
- R¹⁰ =: H, C₁-C₄-Alkyl-, Phenyl-, Benzyl-, C₁-C₄-Alkoxy, Halogen (F, Cl, Br, I), Cyano, -COOH, -COOR⁵, -CO-NH₂, -OCOR⁵,
- R¹¹ =: Arylalkylgruppe mit C₁-C₁₂-Alkyl- und C₆-C₁₄-Arylrest,
- m =: 2 bis 4,
- n =: 0 bis 200,
- p =: 0 bis 20, sowie
- R¹ und R⁵: oben genannte Bedeutung besitzen.

Bevorzugte Monomere, welche die Struktur (IV) bilden, sind Methylpolyethylenglykol-750-methacrylat, Polyethylenglykol-500-methacrylat, Allylpolyethylenglykol-350, Methylpolyethylenglykol-2000-monovinylether, Phenyltriethylenglykolacrylat, Hydroxyethylacrylat, Hydroxypropylacrylat, Hydroxypropylmethacrylat, Polyethylenglykol-500-vinyloxy-butylether, Methylpolyethylenglykol-block-propylenglykolallylether, Tristyrylpolyethylenglykol-1100-methacrylat, Behenylpolyethylenglykol-1100-methacrylat, Tristyrylpolyethylenglykol-1100-acrylat, Tristyrylpolyethenglykol-1100-monovinylether, Behenylpolyethenglykol-1100-monovinylether, Phenyltriethylenglykolacrylat, Tristyrylpolyethylenglykol-1100-vinyloxy-butylether, Behenylpolyethylenglykol-1100-vinyloxy-butylether, Tristyrylpolyethylenglykolblock-propylenglykolallylether, Behenylpolyethylenglykol-block-propylenglykolallylether usw.

Es ist als erfindungswesentlich anzusehen, dass die Copolymere aus 3 bis 96 Mol-% der Baugruppe a), 3 bis 96 Mol-% der Baugruppe b), 0,05 bis 75 Mol-% der Baugruppe c) und 0,01 bis 30 Mol-% der Baugruppe d) bestehen. Vorzugsweise verwendete Polymere enthalten 15 bis 90 Mol-% a), 5 bis 80 Mol-% b), 0,25 bis 50 Mol c) und 0,05 bis 20 Mol-% d). Stärker bevorzugt verwendete Polymere enthalten 40 bis 80 Mol-% a), 15 bis 55 Mol-% b), 2 bis 30 Mol-% c) und 0,1 bis 10 Mol-% d).

Die Anzahl der sich wiederholenden Strukturelemente in den erfindungsgemäßen Copolymeren ist nicht eingeschränkt und hängt sehr stark vom jeweiligen Anwendungsgebiet ab. Es hat sich allerdings als vorteilhaft erwiesen, die Anzahl der Struktureinheiten so einzustellen, dass die Copolymere ein zahlenmittleres Molekulargewicht von 50.000 bis 10.000 000 aufweisen.

Die Herstellung der Copolymere erfolgt in an sich bekannter Weise durch Verknüpfung der die Strukturen a) bis d) bildenden Monomere durch radikalische, ionische oder komplex koordinative Substanz-, Lösungs-, Gel-, Emulsions-, Dispersions- oder Suspensionspolymerisation.

Diese Copolymere sind bereits bekannt und in der WO 02/10 229 A1 und DE 198 06 482 A1 beschrieben.

Als nichtionische Polysaccharid-Derivate lassen sich Celluloseether wie Methylcellulose (MC), Hydroxyethylcellulose (HEC), Hydroxypropylcellulose (HPC), Methylhydroxyethylcellulose (MHEC), Methylhydroxypropylcellulose (MHPC) mit unterschiedlichen Kettenlängen und Substitutionsgraden (DS) einsetzen, aber auch Welan Gum oder Diutan Gum. Die bevorzugten Substitutionsgrade für Celluloseether im Rahmen der vorliegenden Erfindung sind 0,5 bis 5, stärker bevorzugt 1,0 bis 2,5 für die Methylgruppe und 0,1 bis 5, stärker bevorzugt 0,1 bis 1 für die Hydroxyethyl- bzw. Hydroxypropylgruppe je nach Celluloseethertype. Der durchschnittliche Substitutionsgrad beträgt 1,0 bis 2,8. Die Kettenlängen der Celluloseether werden in Viskositäten der 2 %igen Lösung angegeben und liegen zwischen 100 und 100 000, vorzugsweise zwischen 1000 und 80 000 mPa*s (gemessen mit einem Brookfield Viskosimeter RVT)

Die erfindungsgemäße polymere Zusammensetzung besteht aus den beschriebenen Copolymeren und Cellulosederivaten im Verhältnis von 1 : 5 bis 10 : 1. Bevorzugt sind Mischungen im Verhältnis von 1 : 2 bis 7 : 1. Besonders bevorzugt sind Mischungen im Verhältnis von 1 : 1 bis 5 : 1.

Wird diese erfindungsgemäße Zusammensetzung als Zusatzmittel in wässrigen Baustoffsystemen auf der Basis hydraulischer Bindemittel wie Zement, Kalk, Gips, Anhydrit bei einer festgelegten Dosierung eingesetzt, so werden bessere Eigenschaften erzielt, als wenn beide Einzelkomponenten in der gleichen Gesamtdosierung eingesetzt werden, d. h. es liegt eine synergistische Wirkungssteigerung vor.

So wird eine erhebliche Verbesserungen des Wasserretentionsvermögens, der Luftporenstabilität und der Klebrigkeit mit den erfindungsgemäßen Zusammensetzungen erreicht.

Bei hohen Dosierungen von Celluloseethern (0,5 Gew.-%) treten bei hochmolekularen Celluloseethern eine unangenehme Klebrigkeit und eine schlechte, zu stramme Verarbeitungskonsistenz auf. Durch die Wahl niedrigviskoser sulfogruppenhaltiger Copolymere mit geringer Klebrigkeit, aber sehr guter Wasserrückhaltung, kann z. B. ein Fliesenkleber formuliert werden (Gesamtgehalt Wasserretentionsmittel ca. 0,7 bis 1 Gew.-%), der deutlich bessere Wasserrückhalteeigenschaften und dadurch längere Korrigierzeiten der eingelegten Fliese zulässt. Der Kleber zeigt trotz der hohen Dosierung an Wasserrückhaltemitteln sehr gute Verarbeitungseigenschaften (weiche, cremige Konsistenz, bei nicht zu hoher Klebrigkeit).

Auch bei Anwendung in wasserbasierenden Anstrich- und Beschichtungssystemen wird eine unerwartete Verbesserung der Eigenschaften durch die erfindungsgemäße Zusammensetzung erzielt.

Die bevorzugten Einsatzmengen der erfindungsgemäßen Zusammensetzung liegen in Abhängigkeit von der Verwendungsart zwischen 0,01 und 10 Gew.-%, bevorzugt zwischen 0,01 und 5 Gew.-% bezogen auf das Trockengewicht des Baustoff- , Anstrich- bzw. Beschichtungssystems.

Die erfindungsgemäße polymere Zusammensetzung besitzt ausgezeichnete wasserrückhaltende Eigenschaften und verleiht pigmenthaltigen Anstrichstoffen, Putzen, Klebemörteln, Spachtelmassen, Fugenfüllern, Spritzbeton, Unterwasserbeton, Erdölbohrzementen u. a. hervorragende anwendungstechnische Eigenschaften sowohl im Verarbeitungs- als auch im erhärteten bzw. getrockneten Zustand. Die Zusammensetzung zeichnet sich weiterhin dadurch aus, dass man mit ihr in den Baustoffinischungen eine hervorragende Luftporenstabilität und Klebrigkeit erhält und diese durch die Verhältnisse und Wahl der synthetischen Polymere gezielt einstellen kann.

Die folgenden Beispiele sollen die Erfindung näher erläutern.

### Beispiele

Die sulfogruppenhaltigen Copolymere wurden gemäß WO 02/10 229 A1 und DE 198 06 482 A1 durch Gelpolymerisation hergestellt. Die Zusammensetzung der ausgewählten Copolymere ist in Tabelle 1 zusammengefasst.

**Tabelle 1**

| Monomer Baugruppe | a) | b) | c) | d) |
|---|---|---|---|---|
| Copolymer 1¹⁾ | 2-Acrylamido-2-methylpropansulfonsäure, Na-Salz | Acrylamid | [2-(Methacrylamido)-propyl]-trimethylammonium-chlorid | Tristyrylphenolpolyethylenglykol-1100-methacrylat |
| | 47,1 Mol-% | 49,1 Mol-% | 3,1 Mol-% | 0,7 Mol-% |
| Copolymer 2¹⁾ | 2-Acrylamido-2-methylpropansulfonsäure, Na-Salz | N,N-Dimethylaminopropylacrylamid | [2-(Methacrylamido)-propyl]-trimethylammonium-chlorid | Tristyrylphenolpolyethylenglykol-1100-methacrylat |
| | 71,7 Mol-% | 22,5 Mol-% | 4,8 Mol-% | 1,0 Mol-% |
| Copolymer 3¹⁾ | 2-Acrylamido-2-methylpropansulfönsäure, Na-Salz | N,N-Dimethylacrylamid | N,N-Dimethyl-diallylammoniumchlorid | Behenylethylenglykol-1100-methacrylat |
| | 26,8 Mol-% | 13,4 Mol-% | 59,77 Mol-% | 0,03 Mol-% |
| Copolymer 4²⁾ | 2-Acrylamido-2-methylpropansulfonsäure, Na-Salz | N,N-Dimethylacrylamid | [2-(Methacrylamido)-propyl]-trimethylammonium-chlorid | Polyethylenglykol-500-vinyloxybutylether |
| | 66,9 Mol-% | 28,1 Mol-% | 4,6 Mol-% | 0,4 Mol-% |
| Copolymer 5²⁾ | 2-Acrylamido-2-methylpropansulfonsäure, Na-Salz | N,N-Dimethylacrylamid | [2-(Methacrylamido)-propyl]-trimethylammonium-chlorid | Methylpolyethylenglykol-1100-methacrylat |
| | 72,3 Mol-%. | 22,7 Mol-% | 4,8 Mol-% | 0,2 Mol-% |

| | | | | |
|---|---|---|---|---|
| ¹⁾ Copolymer gemäß WO 02/10 229 A1 ²⁾ Copolymer gemäß DE 198 06 482 A1 | | | | |

Als nichtionische Polysaccharid-Derivate wurden verschiedene handelsübliche Celluloseether verwendet, die in Tabelle 2 zusammengestellt sind.

**Tabelle 2**

| Nr. | Cellulosederivat | Typ | Lösungsviskosität |
|---|---|---|---|
| 1 | Tylose MB 10000 P6¹⁾ | Methylhydroxyethylcellulose (MHEC) | 10.000 mPa*s |
| 2 | Culminal MHPC 20000 ²⁾ | Methylhydroxypropylcellulose (MHPC) | 20.000 mPa*s |

| | | | |
|---|---|---|---|
| ¹⁾ Produkt der Fa. Clariant GmbH ²⁾ Produkt der Fa. Hercules Inc. | | | |

Aus den Copolymeren und den Polysaccharid-Derivaten wurden die erfindungsgemäßen Zusammensetzungen hergestellt. Die Mischungsverhältnisse sind in Tabelle 3 zusammengefasst.

**Tabelle 3**

| | **Komponente 1** | **Komponente 2** | **Mischungsverhältnis** |
|---|---|---|---|
| Beispiel 1 | Copolymer 1 | Celluloseether 2 | 4 : 1 |
| Beispiel 2 | Copolymer 1 | Celluloseether 2 | 3 : 1 |
| Beispiel 3 | Copolymer 1 | Celluloseether 2 | 2 : 1 |
| Beispiel 4 | Copolymer 2 | Celluloseether 2 | 1 : 1 |
| Beispiel 5 | Copolymer 2 | Celluloseether 1 | 2 : 1 |
| Beispiel 6 | Copolymer 2 | Celluloseether 1 | 4 : 1 |
| Beispiel 7 | Copolymer 1 | Celluloseether 1 | 1 : 1 |
| Beispiel 8 | Copolymer 1 | Celluloseether 1 | 2: 1 |
| Beispiel 9 | Copolymer 1 | Celluloseether 1 | 3 : 1 |
| Beispiel 10 | Copolymer 3 | Celluloseether 1 | 4 : 1 |
| Beispiel 11 | Copolymer 4 | Celluloseether 2 | 1 : 1 |
| Beispiel 12 | Copolymer 5 | Celluloseether 1 | 2 : 1 |
| Vergleichsbeispiel 1 | Copolymer 1 | - | 1 : 0 |
| Vergleichsbeispiel 2 | Copolymer 4 | - | 1 : 0 |
| Vergleichsbeispiel 3 | - | Celluloseether 1 | 0 : 1 |
| Vergleichsbeispiel 4 | - | Celluloseether 2 | 0 : 1 |
| Vergleichsbeispiel 5 | Copolymer 5 | - | 1 : 0 |

Die anwendungstechnische Beurteilung der erfindungsgemäßen Zusammensetzungen und Vergleichsbeispiele erfolgte anhand eines Testgemischs aus dem Bereich Fliesenklebemörtel.

Hierzu wurde praxisnah unter Einsatz einer gebrauchsfertig formulierten Trockenmischung geprüft, der die erfindungsgemäßen Additive bzw. die Vergleichsprodukte in fester Form zugemischt wurden. Im Anschluss an die Trockenvermischung wurde eine bestimmte Wassermenge zugegeben und mittels einer Bohrmaschine mit G3 Mischer intensiv verrührt (Dauer 2*15 Sekunde). Anschließend reifte die angerührte Mischung 5 min und wurde dann einer ersten visuellen Prüfung unterzogen.

### Bestimmung des Ausbreitmaßes

Die Bestimmung des Ausbreitmaßes erfolgte nach der Reifezeit und ein zweites mal 30 min nach dem Anrühren (nach kurzem Aufrühren mit der Hand) gemäß DIN 18555, Teil 2.

### Bestimmung der Wasserretention

Die Wasserretention wurde ca. 15 min nach dem Anrühren gemäß DIN 18555, Teil 7 ermittelt.

### Bestimmung der Luftporenstabilität

Die Luftporenstabilität wurde qualitativ durch visuelle Beurteilung bestimmt.

### Bestimmung der Klebrigkeit

Die Klebrigkeit wurde qualitativ durch visuelle Beurteilung bestimmt.

### Bestimmung; der Benetzung der Fliese

Die Fliesenkleberformulierung wurde auf eine Faserzementplatte appliziert und nach 10 Minuten eine Fliese (5 x 5 cm) aufgelegt, die für 30 Sekunden mit einem Gewicht von 2 kg belastet wurde. Nach weiteren 60 Minuten wurde die Fliese abgenommen und es wurde ermittelt, zu welchem Prozentsatz die Fliesenrückseite noch mit Kleber behaftet war.

### Bestimmung der Korrigierbarkeit der Fliese

Die Fliesenkleberformulierung wurde auf eine Faserzementplatte appliziert und nach 5 Minuten wurden drei Fliesen (5 x 5 cm) aufgelegt, die für 30 Sekunden mit einem Gewicht von 2 kg belastet wurden. Nach 5, 10 und 15 Minuten wurde jeweils eine Fliese korrigiert. Der Kraftaufwand zum Verschieben der Fliese im Kleberbett wurde beurteilt. Die Beurteilungsskala beinhaltet sehr gut korrigierbar, gut, mittel, schlecht, sehr schlecht korrigierbar und korrigieren nicht mehr möglich.

### Bestimmung der Standfestigkeit (Abrutschtest)

Zum Abrutschtest wurde eine Fliese (15 x 15 cm) in die Fliesenkleberformulierung eingelegt, mit 5 kg Gewicht für 30 Sekunden belastet und der Probenaufbau senkrecht gestellt. Anschließend wurde die Oberkante der Fliese für jeweils 30 Sekunden mit Gewicht belastet und festgestellt, bei welchem Gewicht die Fliese abrutscht.

Die Zusammensetzung des Fliesenklebemörtels ist aus Tabelle 4 zu entnehmen.

**Tabelle 4**

| Zusammensetzung der Testmischung (in Gew.-%) | |
|---|---|
| Komponente | Menge |
| Portlandzement¹⁾ | 36,00 |
| Quarzsand (0,05 - 0,4mm) | 57,84 |
| Weißpigment²⁾ | 5,50 |
| Cellulosefasern | 0,50 |
| Wasserrückhalteinittel | 0,16 |

| | |
|---|---|
| ¹⁾CEM II 42,5 R ²⁾Ulmer Weiß "Juraperle MHS" | |

Die mit den erfindungsgemäßen Zusammensetzungen und den Vergleichsbeispielen erhaltenen Testergebnisse sind in Tabelle 5 dargestellt.

**Tabelle 5**

| Verarbeitungseigenschaften eines Klebemörtels für Keramikfliesen, der mit erfindungsgemäßen Zusammensetzungen und dem Stand der Technik entsprechenden Vergleichsbeispielen modifiziert wurde. | | | | | | | |
|---|---|---|---|---|---|---|---|
| Zusatzmittel | Ausbreitmaß (cm) | Ausbreitmaß nach 30 min (cm) (%) | Wasserretention: (%) | Klebrigkeit | Benetzung (%) | Abrutschen (g) | Luftporenstabilität |
| Beispiel 1 | 14,9 | 15,0 | 99,2 | sehr gut | 85 | 300 | sehr gut |
| Beispiel 2 | 14,5 | 14,3 | 99,0 | sehr gut | 89 | 370 | sehr gut |
| Beispiel 3 | 14,1 | 14,0 | 99,0 | sehr gut | 75 | 300 | sehr gut |
| Beispiel 4 | 14,2 | 14,3 | 98,0 | sehr gut | 80 | 250 | sehr gut |
| Beispiel 5 | 15,0 | 15,1 | 99,0 | sehr gut | 85 | 300 | sehr gut |
| Beispiel 6 | 14,9 | 15,0 | 98,7 | sehr gut | 78 | 200 | sehr gut |
| Beispiel 7 | 15,0 | 15,2 | 98,5 | sehr gut | 80 | 250 | sehr gut |
| Beispiel 8 | 14,7 | 14,8 | 98,9 | sehr gut | 78 | 320 | sehr gut |
| Beispiel 9 | 14,2 | 14,3 | 98,8 | sehr gut | 70 | 400 | sehr gut |
| Beispiel 10 | 15,1 | 15,3 | 99,1 | sehr gut | 80 | 250 | sehr gut |
| Beispiel 11 | 14,8 | 14,5 | 98,5 | sehr gut | 75 | 180 | sehr gut |
| | | | | | | | |
| Vergleichsbeispiel 1 | 15,0 | 15,5 | 98,0 | gut | 65 | 200 | gut |
| Vergleichsbeispiel 2 | 14,8 | 14,5 | 97,5 | mittel | 60 | 100 | mittel |
| Vergleichsbeispiel 3 | 16,0 | 16,1 | 96,4 | sehr gut | 80 | 50 | sehr gut |
| Vergleichsbeispiel 4 | 15,4 | 15,2 | 97,0 | sehr gut | 72 | 70 | sehr gut |

| | | | | | | | |
|---|---|---|---|---|---|---|---|
| Dosierung: 0,16 Gew.-% Wassermenge: 260 g Klebemörtel: 1000 g | | | | | | | |

**Tabelle 6**

| Verarbeitungseigenschaften (incl. Korrigierbarkeiten) eines Klebemörtels für Keramikfliesen, der mit erfindungsgemäßen Zusammensetzungen und dem Stand der Technik entsprechenden Vergleichsbeispielen modifiziert wurde. | | | | | | | |
|---|---|---|---|---|---|---|---|
| Zusatzmittel | Ausbreitmaß (cm) | Ausbreitmaß nach 30 min (cm) | Korrigierbarkeit nach 5, 10 und 15 min | Klebrigkeit | Benetzung (%) | Abrutschen (g) | Luftporeristabilität |
| Beispiel 12 | 14,3 | 14,2 | sehr gut | sehr gut | 85 | 380 | sehr gut |
| | | | sehr gut | | | | |
| | | | gut | | | | |
| Vergleichsbeispiel 3 | --¹⁾ | -- | gut | --²⁾ | 80 | 250 | sehr gut |
| | | | mittel | | | | |
| | | | mittel | | | | |
| Vergleichsbeispiel 5 | 18,3 | 18,6 | sehr gut | sehr gut | 95 | Abrutschen | schlecht |
| | | | gut | | | | |
| | | | mittel | | | | |

| | | | | | | | |
|---|---|---|---|---|---|---|---|
| Dosierung: 1,0 Gew.-% Wassermenge: 320 g Klebemörtel: 1000 g ¹⁾ Wegen der hohen Klebrigkeit und kaugummiartigen Konsistenz ist kein Ausbreitmaß bestimmbar. ²⁾ Der Kleber ist unangenehm stramm und kann nur sehr schwer appliziert werden. Der Verarbeiter würde normalerweise mehr Wasser versenden, was zum Verlust der Standfestigkeit führen würde. Außerdem würden die Eigenschaften des ausgehärteten Klebers durch das zusätzliche Wasser verschlechtert (Veränderung des Wasser / Zement -Verhältnisses). | | | | | | | |

Die Testergebnisse in Tabelle 5 zeigen, dass die erfindungsgemäßen Zusammensetzungen (Beispiele 1 bis 11) ähnliche Ausbreitmaße ergeben wie die Vergleichsbeispiele 1 und 2. Jedoch sind Klebrigkeit, Benetzung, Abrutschen, Luftporenstabilität und auch die Wasserrückhaltewerte deutlich besser als bei den Vergleichsbeispielen 1 und 2. Vergleicht man die erfindungsgemäßen Zusammensetzungen (Beispiele 1 bis 11) mit den Vergleichsbeispielen 3 und 4, so findet man ähnliche Wasserretentionswerte, Klebrigkeiten, Benetzung und Luftporenstabilität. Jedoch sind bei den Vergleichsbeispielen 3 und 4 die Ausbreitmaße höher, die Wasserrückhaltewerte und das Abrutschen sind deutlich schlechter.

Der Synergismus zwischen den sulfogruppenhaltigen Copolymeren und den nichtionischen Polysaccharid-Derivaten in den erfindungsgemäßen Zusammensetzungen wird dadurch ersichtlich, dass die Verarbeitungseigenschaften deutlich besser sind als die additive Kombination der Eigenschaften der Copolymere und nichtionischen Polysaccharid-Derivate. Besonders hervorzuheben sind die weichen cremigen Verarbeitungseigenschaften bei sehr gutem Abrutschverhalten. Dies ermöglicht, Fliesenkleber zu formulieren, die einfach und kraftsparend zu verarbeiten sind und trotzdem den Anforderungen eines extrem standfesten Klebers entsprechen.

Die Testergebnisse bei höherer Dosierung (Tabelle 6) zeigen, dass nur die erfindungsgemäße Zusammensetzung (Beispiel 12) sehr gute Verarbeitungseigenschaften zeigt. Das Vergleichsbeispiele 3 zeigt zu starke Klebrigkeit bzw. kaugummiartige Konsistenz und das Vergleichsbeispiel 5 hat Abrutsch. Bei Beispiel 12 sind somit die hervorragende Korrigierbarkeit über die Zeit bei exzellenter Konsistenz (Ausbreitmaß, Luftporenstabiltiät und Klebrigkeit) und die sehr gute Standfestigkeit hervorzuheben.

Die erfindungsgemäßen Zusammensetzungen sind den in den Vergleichsbeispielen eingesetzten Einzelkomponenten (sowohl den Copolymeren als auch den nichtionischen Polysaccharid-Derivaten) somit deutlich überlegen und stellen damit eine erhebliche Verbesserung des Standes der Technik dar.

## Patentansprüche

1. Polymere Zusammensetzung enthaltend
A) ein wasserlösliches oder wasserquellbares sulfogruppenhaltiges Copolymer bestehend aus
a) 3 bis 96 Mol-% der Formel (I) 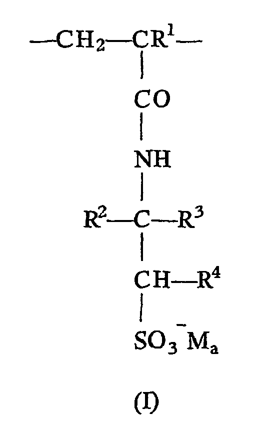 mit
R¹ = Wasserstoff oder Methyl,
R², R³, R⁴ = Wasserstoff, aliphatischer Kohlenwasserstoffrest mit 1 bis 6 C-Atomen, ggf. mit Methylgruppen substituierter Phenylrest und
M = Wasserstoff, ein- oder zweiwertiges Metallkation, Ammonium bzw. ein organischer Aminrest sowie
a = % oder 1,
b) 3 bis 96 Mol-% der Formel (IIa) und/oder (IIb) 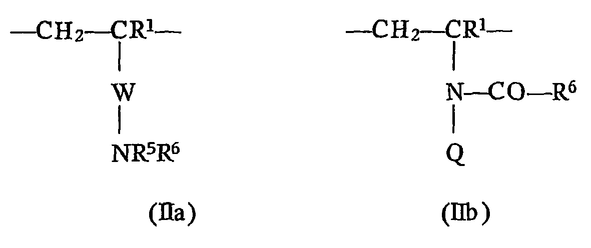 worin
W = -CO-, -CO-O-(CH₂)ₓ-, -CO-NR²-(CH₂)ₓ-,
x = 1 bis 6,
R⁵ und R⁶ = Wasserstoff, ein ggf. substituierter aliphatischer Kohlenwasserstoffrest mit 1 bis 20 C-Atomen, ein cycloaliphatischer Kohlenwasserstoffrest mit 5 bis 8 C-Atomen oder ein Arylrest mit 6 bis 14 C-Atomen und
Q = Wasserstoff und -CHR⁵R⁷ bedeuten sowie im Falle Q ≠ H R⁵ und R⁶ in (IIb) zusammen eine -CH₂-(CH₂)_{y}-Methylengruppe mit y =1 bis 4 bilden
R⁷ = Wasserstoff, ein aliphatischer Kohlenwasserstoffrest mit 1 bis 4 C-Atomen, -COO-Mₐ darstellt, wobei
R¹, R², M und a die oben genannte Bedeutung besitzen,
c) 0,05 bis 75 Mol-% der Baugruppen der Formel (IIIa) und/oder (IIIb) 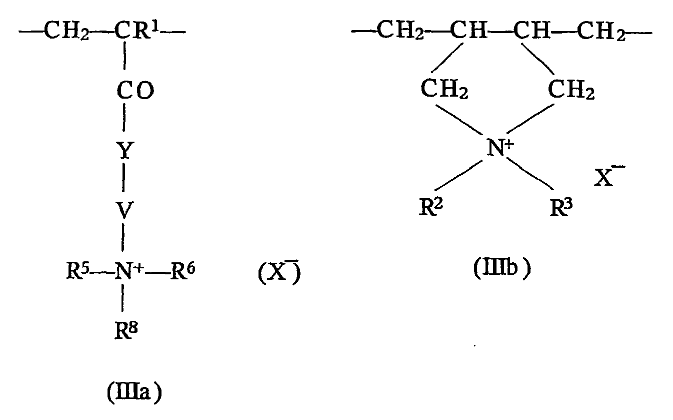 worin
Y = O, NH oder NR⁵,
V = -(CH₂)ₓ-, 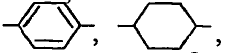
R⁸ = R⁵ bzw.R⁶, -(CH₂)ₓ-SO₃ ^{⊝}(M), 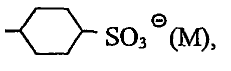 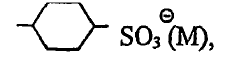
X = Halogen, C₁-bis C₄-Alkylsulfat (vorzugsweise Methylsulfat) oder C₁- bis C₄-Alkylsulfonat und
R¹, R², R³, R⁵, R⁶ , M und x oben genannte Bedeutung besitzen.
d) 0,01 bis 50 Mol-% der Baugruppen der Formel (IV) 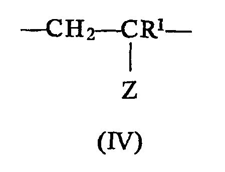 mit
Z = -COO(CₘH₂ₘO)ₙ-R⁹,-(CH₂)ₚ-O(CₘH2ₘO)ₙ-R⁹,
R⁹ = H, C₁-C₄-Alkyl, sowie ungesättigter oder gesättigter, linearerer oder verzweigter aliphatischer Alkylrest mit 20 bis 40 C-Atomen,
R¹⁰ = H, C₁C₄-Alkyl-, Phenyl-, Benzyl-, C₁-C₄-Alkoxy, Halogen (F, Cl, Br, I), Cyano, -COOH, -COOR⁵, -CO-NH₂, -OCOR⁵,
R¹¹ = Arylalkylgruppe mit C₁-C₁₂-Alkyl- und C₆-C₁₄-Arylrest,
m = 2 bis 4,
n = 0 bis 200,
p = 0 bis 20 sowie
R¹ und R⁵ oben genannte Bedeutung besitzen
sowie
B) ein nichtionisches Polysaccharid-Derivat ausgewählt aus der Gruppe Methylcellulose, Hydroxyethylcellulose, Hydroxypropylcellulose, Methylhydroxyethylcellulose, Methylhydroxypropylcellulose sowie Welan Gum oder Diutan Gum,
mit einem Gewichtsverhältnis von A) zu B) von 1 : 5 bis 10 : 1.

2. Zusammensetzung nach Anspruch 1, **dadurch gekennzeichnet, dass** das ein- oder zweiwertige Metallkation aus Natrium-, Kalium-, Calcium- oder Magnesiumionen besteht.

3. Zusammensetzung nach Anspruch 1 oder 2, **dadurch gekennzeichnet, dass** die organischen Aminreste vorzugsweise substituierte Ammoniumgruppen darstellen, die sich ableiten von primären, sekundären und tertiären C₁-C₂₀-Alkylaminen, C₁-C₂₀-Alkanolaminen, C₅-C₈-Cycloalkylaminen und C₆-C₁₄-Arylaminen.

4. Zusammensetzung nach einem der Ansprüche 1 bis 3, **dadurch gekennzeichnet, dass** die Kohlenwasserstoff- oder Arylreste von R⁵ und R⁶ noch mit Hydroxyl-, Carboxyl- oder Sulfonsäuregruppen substituiert sind.

5. Zusammensetzung nach einem der Ansprüche 1 bis 4, **dadurch gekennzeichnet, dass** X in Formel (IIIb) Chlor oder Brom darstellt.

6. Zusammensetzung nach einem der Ansprüche 1 bis 5, **dadurch gekennzeichnet, dass** das Copolymer aus 40 bis 80 Mol-% der Baugruppe a), 15 bis 55 Mol-% der Baugruppe b), 2 bis 30 Mol-% der Baugruppe c) und 0,5 bis 10 Mol-% der Baugruppe d) besteht.

7. Zusammensetzung nach einem der Ansprüche 1 bis 6, **dadurch gekennzeichnet, dass** das Copolymer ein zahlenmittleres Molekulargewicht von 50.000 bis 10.000.000 besitzt.

8. Zusammensetzung nach einem der Ansprüche 1 bis 7, **dadurch gekennzeichnet, dass** das Gewichtsverhältnis vom sulfogruppenhaltigen Copolymer zum nichtionischen Polysaccharid-Derivat 1 : 2 bis 7 : 1, vorzugsweise 1 : 1 bis 5 : 1 beträgt.

9. Verwendung der polymeren Zusammensetzung nach einem der Ansprüche 1 bis 8, als Zusatzmittel in wässrigen Baustoffsystemen auf der Basis hydraulischer Bindemittel wie Zement, Kalk, Gips und Anhydrit sowie in wasserbasierenden Anstrich- und Beschichtungssystemen.

10. Verwendung nach Anspruch 9, **dadurch gekennzeichnet, dass** die polymere Zusammensetzung als Wasserretentionsmittel, Stabilisierer und Rheologiemodifizierer eingesetzt wird.

11. Verwendung nach Anspruch 9 oder 10, **dadurch gekennzeichnet, dass** die polymere Zusammensetzung in einer Menge von 0,01 bis 5 Ges.-%, bezogen auf das Trockengewicht des Baustoff- , Anstrich- oder Beschichtungssystem eingesetzt wird.

## Claims

1. Polymeric composition containing
A) a water-soluble or water-swellable copolymer containing sulfo groups and consisting of
a) from 3 to 96 mol% of the formula (I) 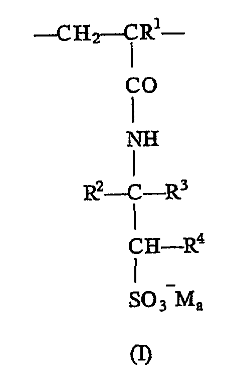 where
R¹ = hydrogen or methyl,
R², R³, R⁴ = hydrogen, aliphatic hydrocarbon radical having 1 to 6 C atoms, phenyl radical optionally substituted by methyl groups and
M = hydrogen, monovalent or divalent metal cation, ammonium or an organic amine radical and
a = ½ or 1,
b) from 3 to 96 mol% of the formula (IIa) and/or (IIb) 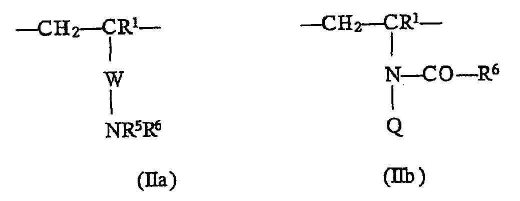 in which
W = -CO-, -CO-O- (CH₂) ₓ-, -CO-NR²-(CH₂)ₓ-,
x = from 1 to 6,
R⁵ and R⁶ = hydrogen, an optionally substituted aliphatic hydrocarbon radical having 1 to 20 C atoms, a cycloaliphatic hydrocarbon radical having 5 to 8 C atoms or an aryl radical having 6 to 14 C atoms and
Q = hydrogen or -CHR⁵R⁷ and, in the case of Q # H, R⁵ and R⁶ in (IIb) together form a-CH₂-(CH₂)_{y}-methylene group with y = from 1 to 4 and
R⁷ = hydrogen, an aliphatic hydrocarbon radical having 1 to 4 C atoms, -COO-Mₐ ,
R¹, R², M and a having the abovementioned meaning,
c) from 0.05 to 75 mol% of the components of the formula (IIIa) and/or (IIIb) 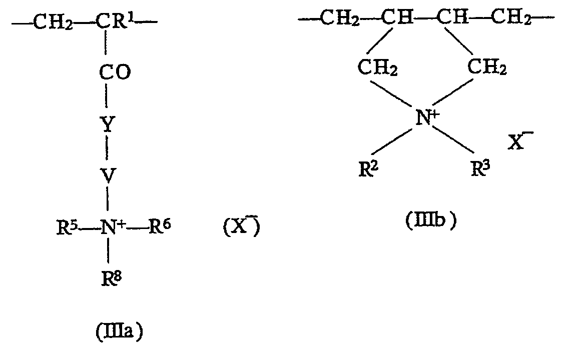 in which
Y = O, NH or NR⁵ ,
V = -(CH₂)ₓ-, 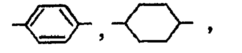
R₈ = R₅ or R₆, 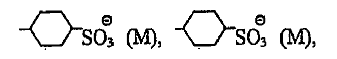
X = halogen, C₁- to C₄-alkylsulfate (preferably methylsulfate) or C₁- to C₄-alkanesulfonate and
R¹, R², R³ , R⁵ , R⁶ , M and x have the abovementioned meaning,
d) from 0.01 to 50 mol% of the components of the formula (IV) 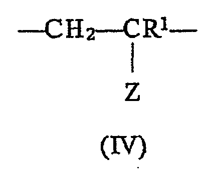
where
Z = -COO(CₘH₂ₘO)ₙ-R⁹,-(CH₂)ₚ-O(CₘH₂ₘO)ₙ-R⁹,
R⁹ = H , C₁-C₄-alkyl , and unsaturated or saturated, linear or branched aliphatic alkyl radical having 20 to 40 C atoms,
R¹⁰ = H , C₁-C₄-alkyl , phenyl , benzyl C₁-C₄-alkoxy, halogen (F, Cl, Br, I), cyano, -COOH, -COOR⁵, -CO-NH , -OCOR⁵,
R¹¹ = arylalkyl group having C₁-C₁₂-alkyl and C₆-C₁₄-aryl radical,
m = from 2 to 4,
n = from 0 to 200,
p = from 0 to 20, and
R¹ and R⁵ have the abovementioned meaning,
and
B) a nonionic polysaccharide derivative selected from the group consisting of methylcellulose, hydroxyethylcellulose, hydroxypropylcellulose, methylhydroxyethylcellulose, methylhydroxypropylcellulose and welan gum or diutan gum,
with a weight ratio of A) to B) of from 1:5 to 10:1.

2. Composition according to Claim 1, **characterized in that** the monovalent or divalent metal cation consists of sodium, potassium, calcium or magnesium ions.

3. Composition according to Claim 1 or 2, **characterized in that** the organic amine radicals are preferably substituted ammonium groups which are derived from primary, secondary and tertiary C₁-C₂₀-alkylamines, C₁-C₂₀-alkanolamines, C₅-C₈-cycloalkylamines and C₆-C₁₄-arylamines.

4. Composition according to any of Claims 1 to 3, **characterized in that** the hydrocarbon or aryl radicals of R⁵ and R⁶ are also substituted by hydroxyl, carboxyl or sulfo groups.

5. Composition according to any of Claims 1 to 4, **characterized in that** X in formula (IIIb) is chlorine or bromine.

6. Composition according to any of Claims 1 to 5, **characterized in that** the copolymer consists of from 40 to 80 mol% of the component a), from 15 to 55 mol% of the component b), from 2 to 30 mol% of the component c) and from 0.5 to 10 mol% of the component d).

7. Composition according to any of Claims 1 to 6, **characterized in that** the copolymer has a number average molecular weight of from 50 000 to 10 000 000.

8. Composition according to any of Claims 1 to 7, **characterized in that** the weight ratio of the copolymer containing sulfo groups to the nonionic polysaccharide derivative is from 1:2 to 7:1, preferably from 1:1 to 5:1.

9. Use of the polymeric composition according to any of Claims 1 to 8 as an additive in aqueous construction systems based on hydraulic binders, such as cement, lime, gypsum and anhydrite, and in water-based paint and coating systems.

10. Use according to Claim 9, **characterized in that** the polymeric composition is used as a water retention agent, stabilizer and rheology modifier.

11. Use according to Claim 9 or 10, **characterized in that** the polymeric composition is used in an amount of from 0.01 to 5% by weight, based on the dry weight of the construction, paint or coating system.

## Revendications

1. Composition polymère, contenant
A) un copolymère contenant des groupes sulfo soluble dans l'eau ou gonflable dans l'eau, constitué de
a) 3 à 96 % en moles de la formule (I) 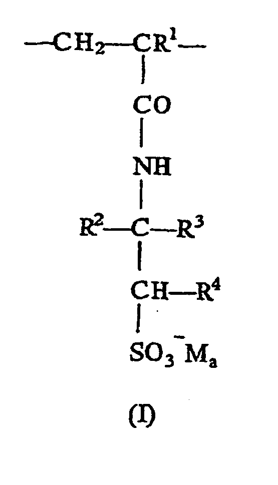 avec
R¹ = hydrogène ou méthyle,
R², R³ , R⁴ = un hydrogène, un radical hydrocarboné aliphatique contenant 1 à 6 atomes C, un radical phényle éventuellement substitué avec des groupes méthyles et
M = un hydrogène, un cation métallique mono- ou bivalent, un ammonium ou un radical amine organique, et
a = ½ ou 1
b) 3 à 96 % en moles de la formule (IIa) et/ou (IIb) 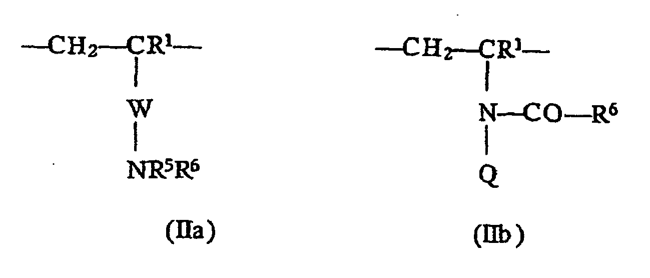 dans lesquelles
W = -CO-, -CO-O-(CH₂)ₓ-, -CO-NR²-(CH₂)ₓ-,
x = 1 à 6,
R⁵ et R⁶ - un hydrogène, un radical hydrocarboné aliphatique éventuellement substitué contenant 1 à 20 atomes C, un radical hydrocarboné cycloaliphatique contenant 5 à 8 atomes C ou un radical aryle contenant 6 à 14 atomes C et
Q = un hydrogène et -CHR⁵R⁷ , et, dans le cas où Q ≠ H, R⁵ et R⁶ forment ensemble dans (IIb) un groupe méthylène -CH₂-(CH₂)_{y}- avec y = 1 à 4
R⁷ = un hydrogène, un radical hydrocarboné aliphatique contenant 1 à 4 atomes C, -COO-Mₐ,
R¹, R², M et a ayant la signification donnée précédemment,
c) 0,05 à 75 % en moles des groupes constitutifs de formule (IIIa) et/ou (IIIb) 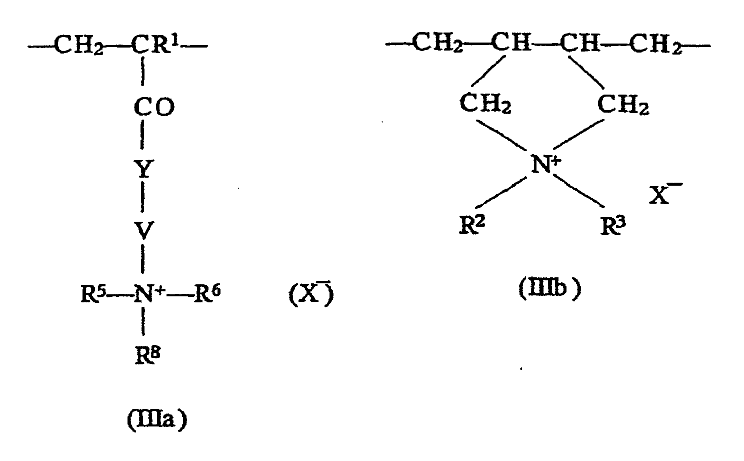 dans lesquelles
Y = O. NH ou NR⁵,
V= -(CH₂)ₓ-, 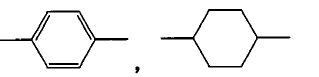 R⁸ = R⁵ ou R⁶, - (CH₂)ₓ-SO₃^{Θ} (M) , 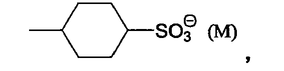 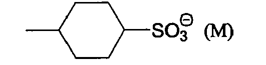 X = un halogène, un sulfate d' alkyle en C₁ à C₄ (de préférence sulfate de méthyle) ou un sulfonate d'alkyle en C₁ à C₄ et
R¹, R², R³, R⁵, R⁶, M et x ont la signification donnée précédemment,
d) 0,01 à 50 % en moles de groupes constitutifs de formule (IV) 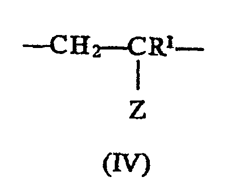 avec
Z = -COO(CₘH₂ₘO)ₙ-R⁹, -(CH₂)ₚ-O(CₘH₂ₘO)ₙ-R⁹,
R⁹ = H, un alkyle en C₁-C₄ et un radical alkyle aliphatique insaturé ou saturé, linéaire ou ramifié, contenant 20 à 40 atomes C,
R¹⁰ = H, un alkyle en C₁-C₄, un phényle, un benzyle, un alcoxy en C₁-C₄ , un halogène (F, Cl, Br, I) , un cyano, -COOH , -COOR⁵, -CO-NH₂, -OCOR⁵,
R¹¹= un groupe arylalkyle contenant un radical alkyle en C₁-C₁₂ et un radical aryle en C₆-C₁₄,
m = 2 à 4,
n = 0 à 200,
p = 0 à 20, et
R¹ et R⁵ ont la signification donnée précédemment
et
B) un dérivé de polysaccharide non ionique choisi dans le groupe constitué par la méthylcellulose, l'hydroxyéthylcellulose, l'hydroxypropylcellulose, la méthylhydroxyéthylcellulose, la méthylhydroxypropylcellulose, ainsi que la gomme gellane ou la gomme diutane,
en un rapport en poids de A) sur B) de 1:5 à 10:1.

2. Composition selon la revendication 1, **caractérisée en ce que** le cation métallique mono- ou bivalent est constitué d'ions sodium, potassium, calcium ou magnésium.

3. Composition selon la revendication 1 ou 2, **caractérisée en ce que** les radicaux amines organiques sont de préférence des groupes ammonium substitués, qui dérivent d'alkylamines en C₁-C₂₀, alcanolamines en C₁-C₂₀, cycloalkylamines en C₅-C₈ et arylamines en C₆-C₁₄ primaires, secondaires et tertiaires.

4. Composition selon l'une quelconque des revendications 1 à 3, **caractérisée en ce que** les radicaux hydrocarbonés ou aryles de R⁵ et R⁶ sont encore substitués avec des groupes hydroxyles, carboxyles ou acide sulfonique.

5. Composition selon l'une quelconque des revendications 1 à 4, **caractérisée en ce que** X dans la formule (IIIb) représente le chlore ou le brome.

6. Composition selon l'une quelconque des revendications 1 à 5, **caractérisée en ce que** le copolymère est constitué de 40 à 80 % en moles du groupe constitutif a), 15 à 55 % en moles du groupe constitutif b), 2 à 30 % en moles du groupe constitutif c) et 0,5 à 10 % en moles du groupe constitutif d).

7. Composition selon l'une quelconque des revendications 1 à 6, **caractérisée en ce que** le copolymère présente un poids moléculaire moyen en nombre de 50 000 à 10 000 000.

8. Composition selon l'une quelconque des revendications 1 à 7, **caractérisée en ce que** le rapport en poids entre le copolymère contenant des groupes sulfo et le dérivé de polysaccharide non ionique est de 1:2 à 7:1, de préférence de 1:1 à 5:1.

9. Utilisation de la composition polymère selon l'une quelconque des revendications 1 à 8 en tant qu'additif dans des systèmes aqueux de matériaux de construction à base de liants hydrauliques tels que le ciment, le talc, le gypse et l'anhydrite, ainsi que dans des systèmes de peinture et de revêtement à base d'eau.

10. Utilisation selon la revendication 9, **caractérisée en ce que** la composition polymère est utilisée en tant qu'agent de rétention d'eau, stabilisateur et modificateur de rhéologie.

11. Utilisation selon la revendication 9 ou 10, **caractérisée en ce que** la composition polymère est utilisée en une quantité de 0,01 à 5 % en poids par rapport au poids sec du système de matériau de construction, de peinture ou de revêtement.
